(19) **Europäisches Patentamt / European Patent Office / Office européen des brevets**

(11) **EP 4 668 611 A1**

(12) **EUROPEAN PATENT APPLICATION**
published in accordance with Art. 153(4) EPC

(43) Date of publication:
**24.12.2025 Bulletin 2025/52**

(21) Application number: **24757310.8**

(22) Date of filing: **16.02.2024**

(51) International Patent Classification (IPC):
$H04B\ 7/06$ (2006.01)   $H04W\ 52/02$ (2009.01)
$H04W\ 72/21$ (2023.01)   $H04W\ 52/36$ (2009.01)
$H04W\ 72/12$ (2023.01)   $H04W\ 72/231$ (2023.01)
$H04W\ 72/232$ (2023.01)   $H04W\ 24/08$ (2009.01)
$H04B\ 7/08$ (2006.01)

(52) Cooperative Patent Classification (CPC):
**H04B 7/06; H04B 7/08; H04W 24/08; H04W 52/02; H04W 52/36; H04W 72/12; H04W 72/21; H04W 72/231; H04W 72/232**

(86) International application number:
**PCT/KR2024/095292**

(87) International publication number:
**WO 2024/172592 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2023  KR 20230021070**
**12.05.2023  KR 20230062066**
**09.08.2023  KR 20230104401**

(71) Applicant: **LG Electronics Inc.**
**Yeongdeungpo-gu**
**Seoul 07336 (KR)**

(72) Inventors:
• **MYUNG, Sechang**
**Seoul 06772 (KR)**
• **KIM, Seonwook**
**Seoul 06772 (KR)**
• **YANG, Suckchel**
**Seoul 06772 (KR)**
• **KIM, Jaehyung**
**Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR TRANSMITTING AND RECEIVING SIGNALS IN WIRELESS COMMUNICATION SYSTEM**

(57) A method and device for transmitting and receiving signals in a wireless communication system disclosed in the present specification transmit a CSI report via a PUCCH resource. Here, the PUCCH resource may be determined on the assumption that the rank of each CSI sub-report in the CSI report is 1.

[FIG. 4]

Receive CSI report configuration — S401

Receive CSI-RS on CSI-RS resource based on CSI reporting configuration — S403

Transmit CSI report based on measurement result for CSI-RS — S405

**EP 4 668 611 A1**

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### Technical Problem

An object of the present disclosure is to provide a signal transmission and reception method and a device therefor for efficiently transmitting and receiving a reference signal and a measurement report in a wireless communication system.
It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

The present disclosure provides a method and apparatus for transmitting and receiving a signal in a wireless communication system.
According to an aspect of the present disclosure, a method of transmitting and receiving a signal by a user equipment (UE) in a wireless communication system includes receiving a channel state information (CSI) reporting configuration, receiving a CSI-reference signal (CSI-RS) on a CSI-RS resource based on the CSI reporting configuration, and transmitting a CSI report based on a measurement result for the CSI-RS, wherein the CSI report is transmitted via a physical uplink control channel (PUCCH) resource, and the PUCCH resource is determined based on assumption that each of CSI sub-reports within the CSI report represents rank 1.
In another aspect of the present disclosure, there are provided an apparatus, a processor, and a storage medium for performing the signal transmission and reception method.
The apparatus may include an autonomous driving vehicle communicable with at least a UE, a network, and another autonomous driving vehicle other than the communication apparatus.
The above-described aspects of the present disclosure are only some of the preferred embodiments of the present disclosure, and various embodiments reflecting the technical features of the present disclosure may be derived and understood from the following detailed description of the present disclosure by those skilled in the art.

### Advantageous Effects

According to an embodiment of the present disclosure, when a reference signal and a measurement report are transmitted and received between communication devices, there is an advantage in that more efficient signal transmission and reception may be performed through operations differentiated from the related art.
It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

FIG. 1 illustrates a radio frame structure.

FIG. 2 illustrates a resource grid during the duration of a slot.

FIG. 3 illustrates a self-contained slot structure.

FIG. 4 is diagram illustrating methods for transmitting and receiving a signal according to the embodiments of the present disclosure.

FIGS. 5 to 8 illustrate devices according to an embodiment of the present disclosure.

## DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

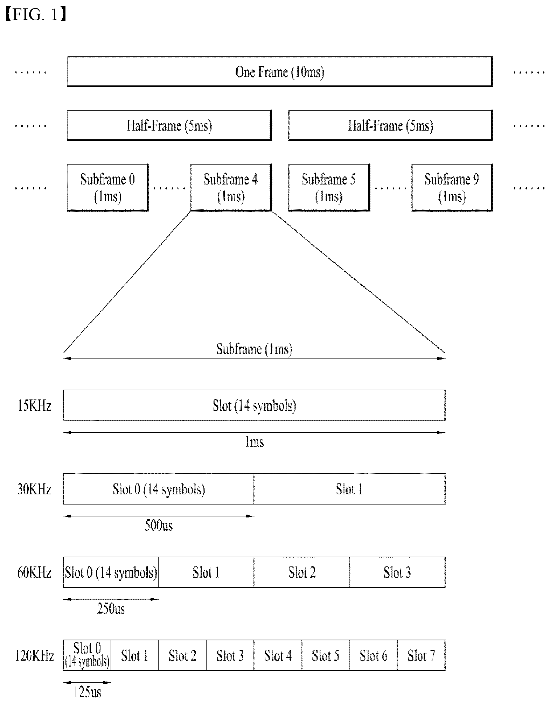

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transformspread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |

(continued)

| SCS (15*2^u) | $N^{slot}_{symb}$ | $N^{frame,u}_{slot}$ | $N^{subframe,u}_{slot}$ |
|---|---|---|---|
| 240KHz (u=4) | 14 | 160 | 16 |

| * $N^{slot}_{symb}$: number of symbols in a slot<br>* $N^{frame,u}_{slot}$: number of slots in a frame<br>* $N^{subframe,u}_{slot}$: number of slots in a subframe |
|---|

Table 2 illustrates that the number of symbols per slot, the number of slots per frame, and the number of slots per subframe vary according to SCSs in an extended CP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

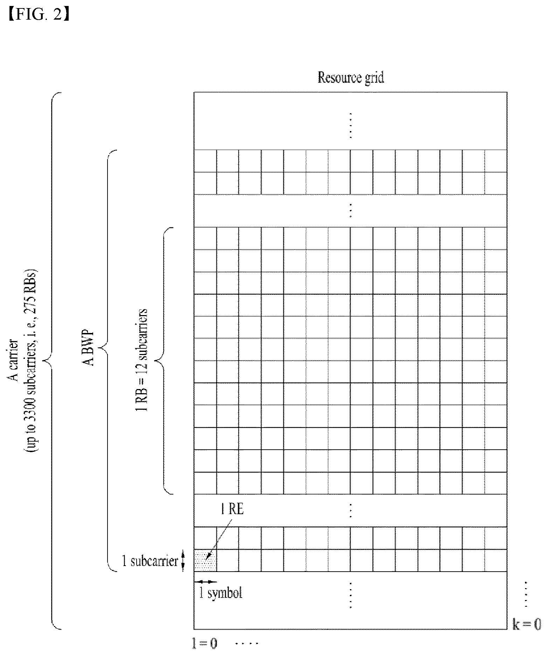

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈{0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel includes a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

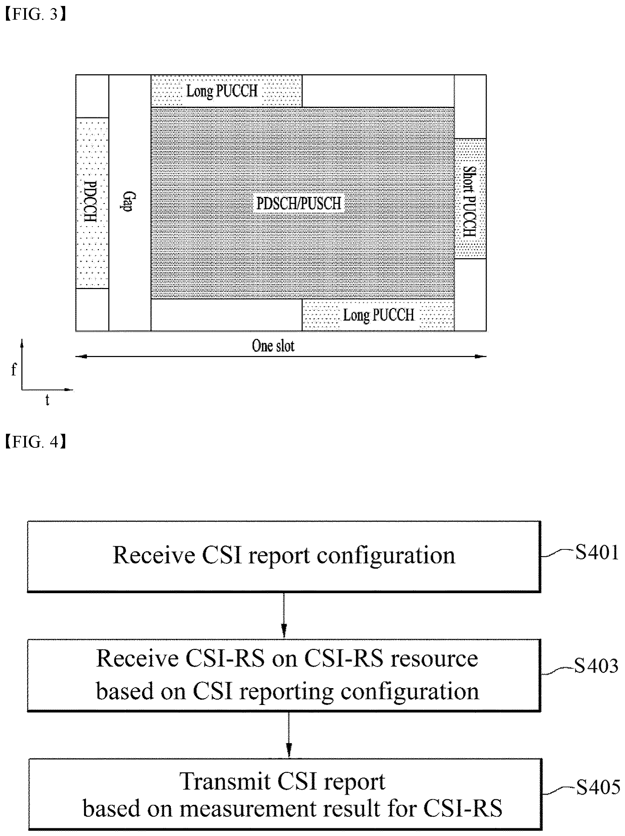

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

UL Physical Channels/Signals

(1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

(2) PUCCH

A PUCCH may carry UCI. The UCI includes the following information.

- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

DL Physical Channel/Signal

(1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

(2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time-/frequency resource allocation information on a higher layer control message such as a random access response (RAR) transmitted over a PDSCH; transmit power control commands; and information on activation/deactivation of SPS/CS. Various DCI formats may be provided depending on information in DCI.

## 1. Collision handling of CSI report containing multiple CSI information

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

Energy saving of BSs has been considered as an important issue in wireless communication systems including 3GPP because it may contribute to establish eco-friendly networks by reducing carbon emissions and reducing the operational expenditure (OPEX) of communication service providers. In particular, as the introduction of 5G communications requires higher transmission rates, BSs need to be equipped with more antennas and provide services through wider bandwidths and frequency bands. This results in BS energy costs reaching as high as 20 % of total OPEX, according to recent researches. Due to this increased interest in BS energy saving, a new study item called "study on network energy savings" is approved in 3GPP NR release 18.

In detail, to improve the energy saving capability of the BS in terms of transmission and reception, the following enhancement techniques have been considered in the corresponding item.

- How to achieve more efficient operation dynamically and/or semi-statically and finer granularity adaptation of transmissions and/or receptions in one or more of network energy saving techniques in time, frequency, spatial, and power domains, with potential support/feedback from UE, and potential UE assistance information

In particular, the present specification proposes a handling method when a collision occurs on the time axis with another CSI report by configuring and/or defining a priority rule for a CSI report containing CSI assuming the number of a plurality of APs and/or a plurality of power offset values.

In this specification, a BS may instruct a UE to calculate and report CSI information for a plurality of antenna ports (APs) and/or a plurality of power offset values for one or a plurality of CSI-RS resources, and adjust the number of APs for a downlink signal/channel or adjust transmission power based on the received CSI report, thereby obtaining a network energy saving (NES) effect. For example, the BS configures the UE to report, in a single CSI report, CSI information assuming the number of a plurality of APs (e.g., 64 APs and 32 APs) and/or CSI information for a plurality of CSI-RS to PDSCH power offset values (e.g., -3 dB and 0 dB), for each CSI-RS resource or a plurality of CSI-RS resources within a CSI-RS resource set. Based on information in this report, the BS may determine the optimal number of APs and PDSCH transmission power/MCS, thereby reducing the power consumption of the BS. In this case, a CSI report containing CSI calculated assuming the number of a plurality of APs and/or a plurality of power offset values may cause a collision with another CSI report containing CSI by at least one symbol on the time axis. In this case, collision handling may be required, where certain CSI reports are transmitted with priority and other CSI reports are dropped, depending on the type of CSI included in each CSI report and the CSI priority rules preconfigured.

In the present disclosure, power offset may mean powerControlOffset, which is an RRC parameter indicating a power offset value between a PDSCH RE and a NZP CSI-RS RE (more precisely, a ratio of PDSCH EPRE to NZP CSI-RS EPRE assumed when the UE calculates CSI feedback). In the present disclosure, NAP is an abbreviation for 'number of antenna ports', and PCO is an abbreviation for 'power control offset (i.e., powerControlOffset)'. In this case, PCO may mean powerControlOffset, an RRC parameter indicating the power offset value of PDSCH RE relative to NZP CSI-RS RE, or may mean powerControlOffsetSS, an RRC parameter indicating the ratio between NZP CSI-RS EPRE and SS/PBCH block. In the former case, the PDSCH power may be adjusted based on the CSI-RS power, and in the latter case, the CSI-RS power may be adjusted relative to the SSB power.

In the present disclosure, the fact that the BS operates in an NES mode for ES may mean, for example, that the BS preconfigures a plurality of OFF intervals (DTX intervals of the BS) to turn off transmission of a specific DL signal for a

specific time interval and dynamically indicates one of the OFF intervals to indicate that the corresponding DL signal may not be transmitted during a predefined time interval, thereby operating to obtain power consumption reduction of the BS and UE. It may also mean an operation mode that reduces power consumption of the BS and UE by not performing BWP switching, dynamic RB adaptation, and the like in the frequency domain as well as in the time domain and not performing transmission and/or reception through a specific reception antenna port of the BS when the BS turns of the corresponding reception antenna port semi-statically or dynamically in the spatial domain.

Table 4 is an excerpt from 3GPP TS 38.331 document, and Table 5 is an excerpt from 3GPP TS 38.214 document and illustrates RRC parameters for configuring NZP CSI-RS resources in the existing NR system. In particular, as seen from Tables 4 and 5, the powerControlOffset parameter is a parameter indicating a power offset between PDSCH REs and NZP CSI-RS REs.

[Table 4]

```
NZP-CSI-RS-Resource ::=                SEQUENCE {
    nzp-CSI-RS-ResourceId                  NZP-CSI-RS-ResourceId,
    resourceMapping                        CSI-RS-ResourceMapping,
    powerControlOffset                     INTEGER (-8..15),
    powerControlOffsetSS                   ENUMERATED{db-3, db0, db3, db6}
OPTIONAL,     -- Need R
    scramblingID                           ScramblingId,
    periodicityAndOffset            CSI-ResourcePeriodicityAndOffset
OPTIONAL,     -- Cond PeriodicOrSemiPersistent
    qcl-InfoPeriodicCSI-RS                 TCI-StateId
OPTIONAL,     -- Cond Periodic
    ...
}
```

| powerControlOffset<br>Power offset of PDSCH RE to NZP CSI-RS RE. Value in dB (see TS 38.214 [19], clauses 5.2.2.3.1 and 4.1). |
| --- |
| powerControlOffset: which is the assumed ratio of PDSCH EPRE to NZP CSI-RS EPRE when UE derives CSI feedback and takes values in the range of [-8, 15] dB with 1 dB step size. For CQI calculation based on a pair of NZP CSI-RS resources, powerControlOffset of each NZP CSI-RS resource in the pair of NZP CSI-RS resources for channel measurement is the assumed ratio of EPRE when UE derives CSI feedback and takes values in the range of [-8, 15] dB with 1 dB step size. |

[Table 5]

| powerControlOffset: which is the assumed ratio of PDSCH EPRE to NZP CSI-RS EPRE when UE derives CSI feedback and takes values in the range of [-8, 15] dB with 1 dB step size. For CQI calculation based on a pair of NZP CSI-RS resources, powerControlOffset of each NZP CSI-RS resource in the pair of NZP CSI-RS resources for channel measurement is the assumed ratio of EPRE when UE derives CSI feedback and takes values in the range of [-8, 15] dB with 1 dB step size. |
| --- |
| powerControlOffsetSS: which is the assumed ratio of NZP CSI-RS EPRE to SS/PBCH block EPRE. |

The UE may know SSB transmit power of a serving BS through an RRC parameter ss-PBCH-BlockPower. The UE may know the CSI-RS transmit power (per CSI-RS resource) of the serving BS through the RRC parameter powerControlOffsetSS. The BS may adjust the transmit power of the PDSCH or adjust the MCS based on a CQI in the CSI report of the UE. When the UE receives a CSI-RS transmitted by the BS, the UE may calculate and report the CQI based on powerControlOffset in a CSI-RS resource configuration assuming that the PDSCH is power boosted or power reduced. Therefore, the UE calculates and reports the CSI assuming that there is a power fluctuation equal to an offset value compared to power of the CSI-RS actually received. The BS may adjust the power and MCS of the PDSCH appropriately based on the reported information or schedule the PDSCH by using the existing configuration without adjusting them (up to gNB implementation). If CSI information corresponding to a plurality of power offset values and/or the number of APs may be configured and/or instructed to be transmitted through a single CSI report, the BS does not need to perform RRC reconfiguration with relatively large delay or to receive a plurality of CSI reports for each of the plurality of power offset values and/or the plurality of APs to change the power offset values and/or the number of APs within a CSI-RS resource or a set of CSI-RS resources. The BS may obtain energy saving effects of the BS by receiving a plurality of power offset values and/or CSI reports for APs at once and using the received CSI reports to quickly adjust downlink power and/or adjust the number of Aps. For convenience, this specification mainly describes a method of configuring a CSI-RS resource and CSI-RS resource set for a plurality of power offset values and a method of configuring/reporting CSI for a plurality of power offset values. However, this may also be applied to the method of configuring the CSI-RS resource and the CSI-RS resource set for the number of APs, and the method of configuring/reporting CSI information for the number of APs. A plurality of power offset values and CSI information for APs may be transmitted together in a single CSI report.

3GPP TS 38.214 Section 5.2.5 describes a calculation method and handling method of priority values for CSI reports as shown in Table 6. When a plurality of CSI reports are configured for a UE and OFDM symbols occupied by the two CSI reports within the same carrier overlap each other by at least one symbol, a collision is defined as occurring between the two CSI reports. According to the collision rules in Table 6, CSI reports with lower priority are not transmitted, or one CSI report is transmitted according to multiplexing rules.

[Equation 1]

$$\text{Pri}_{iCSI}(y,k,c,s) = 2\ N_{cells} \cdot M_s \cdot y + N_{cells} \cdot M_s \cdot k + M_s \cdot c + s$$

[Table 6]

| | |
|---|---|
| y=0 for aperiodic CSI reports to be carried on PUSCH | Rule #1: Time-domain behaviour / channel (AP-CSI > SP-CSI on PUSCH > SP-CSI on PUCCH > P-CSI) |
| y=1 for semi-persistent CSI reports to be carried on PUSCH | Rule #2: CSI content (Beam reports > CSI) |
| y=2 for semi-persistent CSI reports to be carried on PUCCH | Applies only for all periodic reports and semi-persistent reports intended for PUCCH |
| y=3 for periodic CSI reports to be carried on PUCCH | Rule #3: cellID (PCell > PSCell > other cell IDs in increasing order) |
| k=0 for CSI reports carrying L1-RSRP or L1-SINR | Applies only for all periodic reports and semi-persistent reports intended for PUCCH |
| k=1 for CSI reports not carrying L1-RSRP or L1-SINR | Rule #4: csiReportID (in increasing order) |
| | Applies only for all periodic reports and semi-persistent reports intended for PUCCH |
| c is the serving cell index<br>N_cells is the value of the higher layer parameter *maxNrofServingCells*<br>S is the reportConfigID<br>M_s is the value of the higher layer parameter maxNrofCSI-ReportConfigurations | |

Equation 1 above may be interpreted as a priority rule on the right side of Table 6 based on the parameters on the left side of Table 6. For example, Rule #1 states that CSI reports are prioritized based on a channel or a time-domain behavior in which the CSI reports are transmitted. An example of time-domain behavior may have the periodicity/aperiodicity of CSI reporting. According to Rule #1, aperiodic CSI transmitted on a PUSCH has the highest priority, and periodic CSI transmitted on a PUCCH has the lowest priority. Therefore, if a collision occurs in which aperiodic CSI on a PUSCH and periodic CSI on a PUCCH overlap each other by at least one symbol on the same carrier, the periodic CSI on the PUCCH is dropped and not transmitted, and the aperiodic CSI on the PUSCH is transmitted with priority. Rule #2 is applied between CSI reports that have the same priority according to Rule #1. Rule #2 states that CSI reports are prioritized based on the content included in the CSI repots. For example, CSI reports containing CSI related to beam management, such as L1-RSRP or L1-SINR, are transmitted with priority over CSI reports containing PMI or other CSI. As such, for CSI reports that have the same priority according to a specific rule, the next rule is applied.

The BS may turn on and off certain spatial elements for the NES or adjust a power value for a downlink signal/channel. In this specification, the spatial elements may mean antenna ports, or active transceiver chains, or panels, or transmission and reception points (TRPs). To dynamically apply various NES technologies in the spatial domain and power domain, the BS may associate CSI-RS resource sets with different antenna ports for one CSI reporting configuration (e.g., CSI-ReportConfig) or associate a plurality of power offsets (e.g., powerControlOffset parameter, which is a power offset value between a PDSCH and CSI-RS, powerControlOffsetSS parameter, which is a power offset value between SSS and CSI-RS, and the like).

At least one CSI framework from among the following methods may be introduced.

- Method#1: A plurality of sets of CSI-RS resources are linked for one CMR (abbreviation for channel measurement resource, which may be configured by a resourcesForChannelMeasurement parameter) or one IMR (abbreviation for interference measurement resource, which may be configured by csi-IM-ResourcesForInterference or nzp-CSI-RS-ResourcesForInterference parameters) within the CSI-ReportConfig configuration. For example, if CSI-RS resource set #1 and CSI-RS resource set #2 are linked for CMR, CSI-RS resources belonging to CSI-RS resource set #1 may include 16 APs and CSI-RS resources belonging to CSI-RS resource set #2 may include 8 APs.
- Method#2: When there is a set of CSI-RS resources linked to one CMR or one IMR in the CSI-ReportConfig configuration, the corresponding set includes one or more CSI-RS resources with different properties such as the number of APs and/or power offsets. For example, for CSI-RS resource set #1 configured to CMR, CSI-RS resource #1 belonging to CSI-RS resource set #1 may may be configured with 16 APs (or the power offset#1 value is configured), and CSI-RS resource #2 belonging to the same set may be configured with 8 APs (or the power offset#2 value is configured).
- Method#3: When there is a set of CSI-RS resources linked to one CMR or one IMR in the CSI-ReportConfig configuration, some or all of the CSI-RS resource(s) in the corresponding set may be configured with the number of a plurality of APs, a power offsets, and/or the like. For example, for CSI-RS resource set #1 configured to CMR, if CSI-RS resource #1 belonging to CSI-RS resource set #1 may be configured to a maximum of 16 APs, CSI reporting utilizing some of the AP(s) may be configured. Alternatively, a plurality of power offset values may be configured for CSI-RS resource #2 belonging to the same set, and CSI reporting utilizing all or part of the power offsets may be configured.

Under the above CSI framework, a CSI reporting method may be defined through at least one of the following options.

- Option#1: CSIs considering the number of a plurality of APs and/or a plurality of power offset values configured in a single CSI report may all be included in a single CSI report. Alternatively, through the configuration/instruction of the BS, CSIs that consider the number of a plurality of APs and/or a plurality of power offsets (in this case, the number of APs and/or power offsets configured/instructed through the BS may be a part of the number of APs and/or power offset values configured in the corresponding CSI report) may be included in a single CSI report.
- Option#2: Even if the number of a plurality of APs and/or a plurality of power offset values are configured in a single CSI report, CSIs considering only the number of a single AP and/or a single power offset may be included in a single CSI report through the configuration/instruction of the BS.
- Option#3: Even if the number of a plurality of APs and/or a plurality of power offset values are configured in a single CSI report, CSIs considering the number of some APs and/or some power offsets may be included in a single CSI report through determination/decision of the UE (by using criteria preconfigured by the BS or pre-defined).

L (>1) sub-configurations may be configured within a CSI-ReportConfig. Each sub-configuration may correspond to one spatial domain adaptation pattern or one power domain adaptation pattern.

Here, the spatial domain adaptation pattern may correspond to the number of specific antenna ports (or antenna port on/off pattern) or a specific CSI-RS power value (e.g., CSI-RS power value determined by the powerControlOffsetSS parameter, which is a power offset value between SSS and CSI-RS because when some antenna elements corresponding to one antenna port are turned off, it may affect the CSI-RS power value). When Method#2 is applied, if the number of APs (or power value P1) of A1 is configured for CSI-RS index#n1 belonging to a resource set, and the number of APs (or power value P2) of A2 is configured for CSI-RS index#n2 belonging to the same set, the sub-configuration index#s1 is linked with CSI-RS#n1, and sub-configuration index#s2 is linked with CSI-RS index#n2, and thus a different spatial domain adaptation pattern may be configured for each sub-configuration. When Method#3 is applied, if the number of APs A1 (or power value P1/P2) is configured to CSI-RS index#n1 belonging to the resource set, the number of APs A1 (or power value P1) is linked to the sub-configuration index#s1, and the number of APs A2 (or power value P2) constituting the CSI-RS index#n1 is linked to the sub-configuration index#s2 (A1 > A2), and thus a different spatial domain adaptation pattern may be configured for each sub-configuration.

The power domain adaptation pattern may mean that the power offset value (e.g., the power offset value determined by the powerControlOffset parameter, which is the power offset value between PDSCH and CSI-RS, the powerControlOffsetSS parameter, which is the power offset value between SSS and CSI-RS, etc.) changes. When Method#2 is applied, if the power value P1 is configured to the CSI-RS index#n1 belonging to the resource set and the power value P2 is configured to the CSI-RS index#n2 belonging to the same set, the sub-configuration index#s1 is linked to the CSI-RS index#n1, and the sub-configuration index#s2 is linked to the CSI-RS index#n2, and thus the power domain adaptation pattern may be configured differently for each sub-configuration. When Method#3 is applied, if power value P1 (power value P2) is configured to CSI-RS index#n1 belonging to the resource set, power value P1 is linked to sub-configuration index#s1, and power value P2 is linked to sub-configuration index#s2, and thus power domain adaptation patterns may be configured differently for each sub-configuration. The UE may feed back to the BS a CSI report including CSI corresponding to N (N value greater than or equal to L) sub-configuration from among the L sub-configurations (by using one of the methods of Option#1/2/3 above).

[Method #1] Method of previously configuring/indicating/defining a priority between a CSI report containing CSI calculated assuming the number of a plurality of APs or a plurality of power offset values and a CSI report containing other CSIs by comparing CSI contents in respective CSI reports when a collision occurs between the CSI reports, and/or a priority between a cell operating in NES and a cell operating in non-NES

When a collision occurs between two CSI reports, a first collision rule (i.e., the channel and time-domain behavior on which the CSI reports are transmitted) is applied to compare priorities between the two CSI reports. If two CSI reports are CSI reports with the same priority, a second collision rule compares the CSI contents included in the two CSI reports to determine the priority. In this case, a BS may previously configure/indicate a priority of CSI reports including CSI calculated assuming the number of the plurality of APs or the plurality of power offset values. Alternatively, priorities may be defined in standard documents, or the like, and the corresponding priorities may be prestored in a UE. For example, CSI reports containing beam-related CSI, such as L1-RSRP or L1-SINR, may be configured to the highest priority, and CSI calculated assuming the number of a plurality of APs or a plurality of power offset values may be configured to the next priority. Or, conversely, depending on the purpose/needs of the BS (e.g., when the BS operates in a normal operation mode (non-NES mode)), CSI reporting that includes CSI calculated assuming the number of the plurality of APs or the plurality of power offset values may be configured to the lowest priority.

A priority between CSI reports including CSI calculated assuming the number of the plurality of APs and CSI reports including CSI calculated assuming the plurality of power offset values may be previously configured/indicated/-defined. For example, separate priorities may be configured by number of APs, by power offset values, or by a combination of the two. For example, when there is CSI assuming the number of the plurality of APs, only the CSI calculated assuming 64 APs or the CSI calculated assuming 3 dB power offset is configured to the higher priority, and thus, if a collision occurs between the two CSI reports, the CSI report assuming 64 APs may be transmitted. As another example, to prioritize more accurate CSI, a higher priority may be given to the number of APs/power offset value corresponding to CSI with higher CQI (or more layers or larger RI values).

As another example, the BS may configure the highest priority for the CSI report assuming the number of the plurality of APs and the plurality of power offset values, and then previously configure/indicate that the priority of CSI assuming the number of the plurality of APs be higher than the priority of CSI assuming the plurality of power offset values. If there are three CSI reports each containing different CSI, and a collision occurs between two different CSI reports, CSI report A may include all of the CSIs calculated assuming the number of the plurality of APs and the plurality of power offset values, CSI report B may include the CSI calculated assuming the number of the plurality of APs, and CSI report C may include the CSI calculated assuming the plurality of power offset values. The UE may transmit CSI report A when CSI report A collides with CSI report B or C, and may transmit CSI report B with priority when CSI report B collides with CSI report C, according to a pre-configured priority. Alternatively, depending on configuration/instructions of the BS, when a collision occurs between CSI reports, instead of dropping one of the two, the two CSIs may be multiplexed and transmitted. In this case, the CSI with the higher priority from among the two may be mapped first, and if the amount of resources allocated to the CSI report is less than a payload size, the CSI with the lower priority may be omitted.

When the priorities of two CSI reports based on CSI contents are the same, the priorities are determined by comparing the cell indices of serving cells. In this case, the CSI report of a cell operating in a NES may be pre-configured/instructed/defined to have the next highest priority or the highest priority after a primary cell (P-cell) and a primary secondary cell (PS-cell). Or, conversely, depending on the purpose/need of the BS (e.g., when the BS operates in a normal operation mode (non-NEs mode)), the CSI reporting of a cell operating in NES may be configured to a lower priority than that of a primary cell (P-cell) and a primary secondary cell (PS-cell). In this case, the BS may apply different priorities through explicit instructions (group common DCI/MAC-CE) or the priorities may be applied in conjunction with implicit instructions (NES or non-NES mode/state=ON instructions). Here, the fact that CSI reporting assuming the number of the plurality of APs and/or the plurality of power offset values is configured/instructed (or that CSI report for NES is configured/instructed) may mean that CSIs corresponding to N or more (N>1) sub-configurations from among a total of L sub-configurations pre-configured to the UE are fed back through a PUCCH or a PUSCH in one CSI reporting instance.

In the present disclosure, the number of specific APs or specific power offset values may correspond to a specific sub-configuration index from among a plurality of CSI reporting sub-configurations included in a CSI reporting configuration. For example, a spatial domain adaptation pattern with a number of 64 APs and a spatial domain adaptation pattern with a number of 32 APs may correspond to sub-configuration index #0 and sub-configuration index #1, respectively. The BS may configure/instruct to report a plurality of CSIs corresponding to N sub-configurations from among L sub-configurations configured in the CSI reporting configurations as one CSI report. The number of sub-configuration indices corresponding to the CSI included in each CSI report or the number of sub-configuration indices corresponding to which CSI information is included may differ for each CSI report, and thus, when calculating the priority for each CSI report by using the formula in Table 7, the number of sub-configuration indices and the number of sub-configuration indices included in the CSI report may be considered together.

[Table 7]

| CSI reports are associated with a priority value |
|---|
| $Pri_{iCSI}(y,k,c,s) = 2\,N_{cells} \cdot M_s \cdot y + N_{cells} \cdot M_s \cdot k + M_s \cdot c + s$ |
| where |
|      - y=0 for aperiodic CSI reports to be carried on PUSCH y=1 for semi-persistent C SI reports to be carried on PUSCH, y=2 for semi-persistent CSI reports to be ca rried on PUCCH and y=3 for periodic CSI reports to be carried on PUCCH; |
|      - k=0 for CSI reports carrying L1-RSRP or L1-SINR and k=1 for CSI reports not carrying L1-RSRP or L1-SINR; |
|      - c is the serving cell index and $N_{cells}$ is the value of the higher layer parameter maxNrofServingCells; |
|      - s is the reportConfigID and $M_s$ is the value of the higher layer parameter maxNr of CSI-ReportConfigurations. |

For example, sub-configuration index p and the number q of sub-configurations included in the CSI report from among the total L sub-configuration indices may be added as parameters to the formula, and the higher the sub-configuration index included in the CSI report and the greater the number of sub-configurations included in the CSI report, the higher the priority the CSI report may have, such as $Pri_{iCSI}(y,k,c,s,p,q) = 2\,N_{cells} \cdot M_s \cdot y + N_{cells} \cdot M_s \cdot k + M_s \cdot c + s + (L-p) + q$ $Pri_{iCSI}(y,k,c,s,p,q) = 2 \cdot N_{cells} \cdot M_s \cdot y + N_{cells} \cdot M_r \cdot k + M_r \cdot c + s + (L-p) + q$. In the case of the existing CSI reporting, there is no sub-configuration index, and thus the priority may always be calculated under the state of p=L and q=0.

As another example, the sub-configuration index q and the maximum number of sub-configuration indices q_max may be added as parameters to the formula, such as $Pri_{iCSI}(y,k,c,s,q) = 2 \cdot q_{max} \cdot N_{cells} \cdot M_s \cdot y + q_{max} \cdot N_{cells} \cdot M_s \cdot k + q_{max} \cdot M_s \cdot c + q_{max} \cdot s + q$. The lower the sub-configuration index included in a CSI report, the higher priority that CSI report may have. Here, in the case of the existing CSI reporting, there is no sub-configuration index, and thus the priority may always be calculated under the state of q=0.

[Method #2] CSI transmission method assuming the number of a plurality of APs and/or a plurality of power offset values through a plurality of CSI PUCCH resources

A single CSI report may be transmitted through a PUCCH resource configured by pucch-CSI-ResourceList, which is an RRC parameter. A plurality of CSI reports may be transmitted over PUCCH resources configured by multi-CSI-PUCCH-ResourceList, which is an RRC parameter. If the CSI report assuming the number of the plurality of APs and/or the plurality of power offset values is configured/instructed for the UE (or CSI report for NES is configured/instructed) and multi-CSI-PUCCH-ResourceList is configured for the UE, the amount of CSI may be relatively larger than the amount of CSI calculated assuming the number of a single AP or a single power offset value. Accordingly, the BS may configure/instruct the UE to perform CSI reporting by using PUCCH resources configured for a plurality of CSI reports rather than PUCCH resources for a single CSI report. Here, the fact that CSI reporting assuming the number of the plurality of APs and/or the plurality of power offset values is configured/instructed (or that CSI report for NES is configured/instructed) may mean that CSIs corresponding to N or more (N>1) sub-configurations from among a total of L sub-configurations pre-configured to the UE are fed back through a PUCCH or a PUSCH in one CSI reporting instance.

That is, the UE that has received the corresponding configuration/instruction may select a plurality of CSI PUCCH resources instead of a single CSI PUCCH resource and perform CSI reporting when the CSI calculated assuming the number of the plurality of APs and/or the plurality of power offset values is triggered as a single CSI report even if conditions for selecting a plurality of CSI PUCCHs are not satisfied (for example, when multi-CSI-PUCCH-ResourceList is configured but there is no overlap between multiple PUCCH resources or between PUSCH/PUCCH resources). Alternatively, when CSI calculated assuming the number of the plurality of APs and/or the plurality of power offset values is reported, the BS may preconfigure a separate PUCCH resource, and the UE may perform CSI reporting through the corresponding resource. In this case, if multi-CSI-PUCCH-ResourceList is not configured, the UE may report CSI information on a single CSI PUCCH, or drop CSI information with lower priority and report only as much CSI as may be carried on a single CSI PUCCH resource.

If a collision occurs between CSI reports for different single AP numbers and single power offset values, depending on the capability of the UE, the CSI may be multiplexed or only the CSI with the highest priority may be transmitted and other CSI reports may be dropped. That is, when the UE has the capability to report simultaneously, the two multiplexed CSIs are transmitted through a plurality of CSI PUCCH resources. Otherwise, the UE may compute priority rules from among existing CSI reports and transmit only the one with the highest priority and drop the rest. When the BS suddenly instructs a change in the number of APs (or power offset value) through DCI while the UE calculates CSI information and prepares a report by assuming the number of specific APs (or a specific power offset value) according to the instruction of the BS, the UE may calculate the corresponding CSI from a time of the DCI instruction and determine whether to drop the corresponding CSI report by considering a processing timeline, such as a time when the CSI report transmission starts. For example, when preparing a CSI report by calculating CSI assuming a number of 32 APs, an additional CSI report for CSI assuming a number of 64 APs is instructed through DCI. If there is insufficient processing time before the CSI report is transmitted, considering the processing timeline, the UE may drop the CSI report. Alternatively, the UE may not expect the BS to change the number of APs (or power offset value) through DCI while calculating CSI and preparing a report assuming the number of specific APs (or a specific power offset value).

When the UE performs CSI reporting through a PUCCH, the UE needs to calculate the UCI payload size for selecting a specific PUCCH resource from among a plurality of PUCCH resources configured to the UE. In this case, if the CSI report is a CSI report associated with the number of the plurality of APs (and/or the plurality of power offset values), the UCI payload size to be assumed based on RANK-1 for which the number of APs may be configured may be configured/instructed in advance by the BS. In this case, the UE may be configured/instructed to assume the UCI payload size based on the RANK-1 of the number of specific APs. Alternatively, the UE may be configured/instructed to assume the UCI payload size based on the sum of the CSI Part 2 payload sizes based on RANK-1 for each number of APs (generally based on RANK-1 for each sub-configuration). In general, the UE may be configured/instructed to assume the UCI payload size based on the sum of the CSI Part 2 payload sizes based on RANK-1 for each sub-configuration. For example, if the UE is instructed to report CSI assuming the number of APs is 32 and 64, and is configured/instructed in advance to assume a UCI payload size based on the largest number of APs, the UE may select a PUCCH resource that matches the payload size from among the configured PUCCH resources, assuming a UCI payload size based on RANK-1 for the number of APs is 64.

[Method #3] Method of configuring a plurality of PUCCH resources for CSI reporting and selecting and transmitting specific PUCCH resources according to the number of activated/triggered sub-configurations

As a specific method of configuring a separate PUCCH resource for when the BS reports CSI information calculated by assuming the number of a plurality of APs and/or a plurality of power offset values in advance, the UE may receive a plurality of PUCCH resources for CSI reporting from the BS, and select and transmit a specific PUCCH resource to be used for CSI reporting according to the number of sub-configurations that are actually activated/triggered.

According to the current 3GPP TS 38.331, only one PUCCH resource for semi-persistent (SP)-CSI report transmission may be configured per BWP. However, in cases in which CSI corresponding to a plurality of sub-configurations are included in one CSI report and transmitted via a PUCCH, the BS may configure a plurality of PUCCH resources to the UE in advance. For example, two (or X>1) PUCCH resources may be pre-allocated for SP-CSI reporting. An index of each PUCCH resource may be PUCCH resource #1 and PUCCH resource #2. N is less than L, where L is the total number of configured sub-configurations, and N is the number of sub-configurations from among the L sub-configurations that are triggered/enabled to report as actual CSI reports. The N value and PUCCH resource may be linked in advance such that when a CSI report is triggered with N being 3 or less, PUCCH resource #1 is used to transmit the CSI report, and when a CSI report is triggered with N being 4 or more (more than 3), PUCCH resource #2 is used to transmit the CSI report.

As another example, if there is only one sub-configuration that the BS configures/instructs the UE to report with CSI report (i.e., N=1), then PUCCH resource #1 may be pre-configured to be used. If the number of sub-configurations that the BS configures/instructs the UE to report as CSI reports exceeds N=1, it may be pre-configured to use PUCCH resource #2. PUCCH resource #1 may be a PUCCH resource configured one per BWP according to the existing NR system. PUCCH resource #2 may be a PUCCH resource distinct from the existing PUCCH resource configured by the BS for CSI reporting for energy saving. The UE may perform CSI reporting by using PUCCH resource #1 when the number of sub-configurations triggered/activated to be included in one CSI report is 1, and may perform CSI reporting by using PUCCH resource #2 when the number of sub-configurations triggered/activated to be included in one CSI report exceeds 1.

[Method #4] Method of configuring a PUCCH resource for a plurality of CSI reports and method of selecting PUCCH resources to be used for CSI reporting according to the number of NES CSI reports (CSI information corresponding to a plurality of sub-configurations is included in one CSI report) on a transmission occasion (TO) or the number of triggered/activated sub-configurations

According to the existing 3GPP TS 38.213, the PUCCH resources selected are different depending on the number of CSI reports transmitted in one transmission occasion (TO) (i.e., depending on whether it is a single CSI report or a plurality of CSI reports) (Table 8).

[Table 8]

| 9.2.5.2 UE procedure for multiplexing HARQ-ACK/SR/CSI in a PUCCH |
| --- |
| For a transmission occasion of a single CSI report, a PUCCH resource is provided by pucch-CSI-ResourceList. For a transmission occasion of multiple CSI reports, corresponding PUCCH resources can be provided by multi-CSI-PUCCH-ResourceList. If a UE is provided first and second PUCCH-Config, multi-CSI-PUCCH-ResourceList is provided by the first PUCCH-Config, and PUCCH-ResourceId in pucch-CSI-ResourceList or multi-CSI-PUCCH-ResourceList indicates a corresponding PUCCH resource in PUCCH-Resource provided by the first PUCCH-Config. |

If a TO corresponding to a plurality of CSI reports may also include a CSI report with L (L>1) sub-configurations, a multi-CSI-PUCCH-ResourceList2 may be configured in addition to the existing multi-CSI-PUCCH-ResourceList, and different PUCCH resources may be preconfigured to be selected depending on whether a NES (for energy saving of the BS) CSI report (a CSI report including CSI information corresponding to a plurality of sub-configurations) is included or depending on the number of triggered/activated sub-configurations. For example, in a situation in which the UE needs to transmit a plurality of CSIs (HARQ-ACK/SR/CSI) via a PUCCH, if there is one sub-configuration that the BS has configured/instructed to report to the UE via a CSI report in advance, the PUCCH resource configured to multi-CSI-PUCCH-ResourceList may be preconfigured to be used. If the number of sub-configurations to be multiplexed exceeds 1 (configured by the BS for CSI reporting for energy saving), the PUCCH resource configured to multi-CSI-PUCCH-ResourceList2 may be pre-configured to be used. The UE may perform CSI reporting by using PUCCH resources within multi-CSI-PUCCH-ResourceList when there is only one sub-configuration triggered/activated to be included in multiple CSI reports, and transmit CSI reports by using PUCCH resources within multi-CSI-PUCCH-ResourceList2 when the number of the sub-configurations exceeds 1.

Alternatively, the maximum of two PUCCH resources may be configured in the current existing multi-CSI-PUCCH-ResourceList, but in Rel-18, more PUCCH resources are configured for NES CSI reporting, and depending on the number of NES CSI reports (CSI information corresponding to a plurality of sub-configurations are included in one CSI report) or the number of triggered/activated sub-configurations, different PUCCH resources may be used for CSI reporting and configured in conjunction therewith.

The present disclosure is not limited to transmission and reception of UL and/or DL signals. For example, the present disclosure may also be used for direct communication between UEs. In addition, the term "BS" in the present disclosure may include a relay node as well as a base station. For example, the operations of the BS described in this document may be performed by base stations, but the operations may also be performed by relay nodes.

It is obvious that each of the examples of the proposed methods may also be included as one implementation method of the present disclosure, and thus each example may be regarded as a kind of proposed method. Although the above-described proposed methods may be implemented independently, some of the proposed methods may be combined (or merged) and implemented. In addition, it may be regulated that information on whether the proposed methods are applied (or information on rules related to the proposed methods) is transmitted from the BS to the UE or from the transmitting UE to the receiving UE in a predefined signal (e.g., physical layer signaling or higher layer signaling).

Implementation Examples

FIG. 4 is a flowchart of a signal transmission and reception method according to embodiments of the present disclosure.

Referring to FIG. 4, embodiments of the present disclosure may be performed by a UE and may include receiving CSI reporting configurations (S401), receiving CSI-RSs on CSI-RS resources based on the CSI reporting configurations (S403), and transmitting CSI reports based on a measurement result for the CSI-RSs (S405).

In addition to the operations of FIG. 4, one or more of the operations described through Section 1 may be further performed.

The CSI reporting configuration of FIG. 4 may be CSI-ReportConfig, which is an RRC parameter. A single CSI reporting configuration may contain one or more CSI-RS resource set configurations. A single CSI-RS resource set configuration may include one or more CSI-RS resource configurations. Table 4 shows CSI-RS resource configurations that are to be configured via RRC signaling.

As described above, CSI by the existing NR system may be divided into type 1 CSI and type 2 CSI. Each type of CSI is divided into Part 1 CSI and Part 2 CSI.

According to the additional proposal in this specification compared to the existing NR system, L sub-configurations may be included in the CSI report configuration CSI-ReportConfig. Each sub-configuration may correspond to a spatial domain adaptation pattern or a power domain adaptation pattern. The spatial domain adaptation patterns correspond to a specific number of antenna ports, and thus, each sub-configuration may include parameters for a specific number of antenna ports. The power domain adaptation patterns correspond to specific power offset values, and thus, each sub-configuration may include parameters for specific power offset values.

As described above, CSI corresponding to one sub-configuration included in a specific CSI reporting configuration is included in the CSI report and fed back to the BS. To distinguish from CSI reports corresponding to CSI reporting settings, CSI reports corresponding to sub-configurations may be referred to as CSI sub-reports (or sub-reports).

In each method of this specification, determination of PUCCH resources is described under this background.

In particular, referring to Method #2, the UE selects a specific PUCCH resource from among a plurality of configured PUCCH resources to transmit a CSI report on the PUCCH resource. When a CSI report is a CSI report associated with the number of a plurality of APs, i.e., a CSI report including a plurality of sub-reports corresponding to a plurality of sub-configurations, it needs to be determined to select PUCCH resources assuming rank 1 for a certain number of APs or power offset values.

Referring to the example of method #2, the BS may be configured/instructed to assume rank 1 for a specific number of APs or a specific power offset value as a reference, or may be configured/instructed to assume rank 1 for each number of APs or each power offset value.

Considering that the number of APs or the power offset value corresponds to a sub-configuration and that a sub-configuration corresponds to a sub-report, the PUCCH resource is determined based on an assumption that a specific CSI sub-report indicates rank 1 (first assumption) or based on an assumption that each CSI sub-report within a CSI report indicates rank 1 (second assumption).

In more detail, if the UE determines a PUCCH resource based on the second assumption, the UE may calculate a UCI payload size based on the second assumption and select a PUCCH resource based on the calculated UCI payload size. Here, the calculated UCI payload size may be for Part 2 CSI.

The selected PUCCH resource may be determined as a PUCCH resource configured through multi-CSI-PUCCH-ResourceList from among the PUCCH resources configured through pucch-CSI-ResourceList, which is an RRC parameter for a single CSI report, or from among the PUCCH resources configured through multi-CSI-PUCCH-ResourceList, which is an RRC parameter for a plurality of CSI reports. This is a result of considering that even if the number of CSI reports is one, the amount of CSI is greater than that of the existing single CSI report because the CSI report includes a plurality of CSI sub-reports.

The number of PRBs for PUCCH resources may be determined based on the UCI payload size, MCS, code rate, number of PUCCH symbols, and the like. If the UCI payload size is determined based on the second assumption, this may also be interpreted as the number of PRBs for PUCCH resources being determined based on the second assumption.

In addition to the operations of FIG. 4, one or more of the operations described with reference to FIGS. 1 to 3 and the operations described with reference to section 1 may be also performed in combination.

<u>Example of communication system to which the present disclosure is applied</u>

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

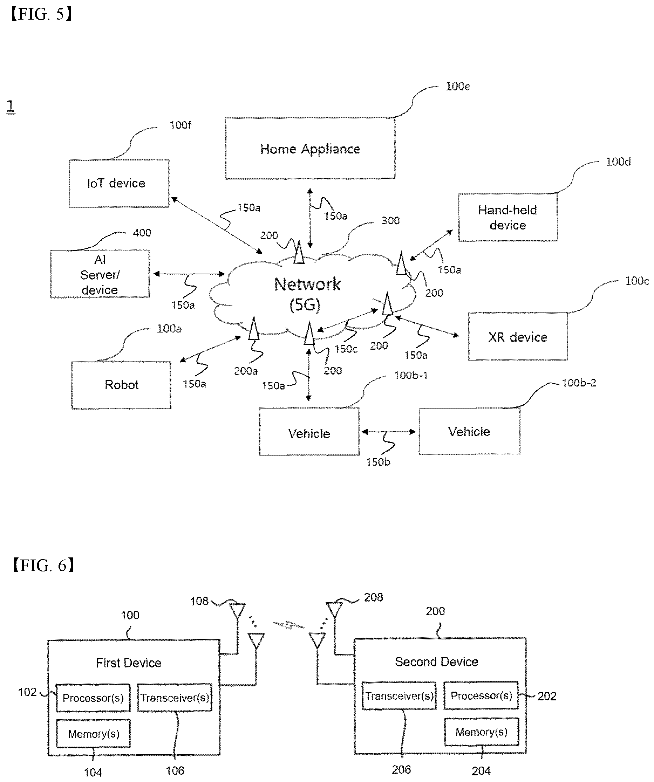

FIG. 6 illustrates a communication system 1 applied to the present disclosure.

Referring to FIG. 6, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

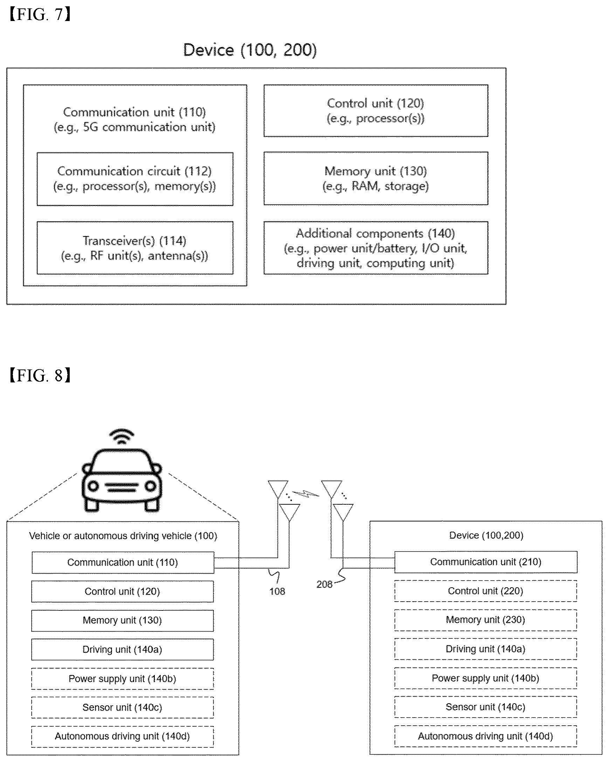

FIG. 7 illustrates wireless devices applicable to the present disclosure.

Referring to FIG. 7, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 6.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

FIG. 8 illustrates another example of a wireless device applied to the present disclosure. The wireless device may be implemented in various forms according to a use case/service (refer to FIG. 6).

Referring to FIG. 8, wireless devices 100 and 200 may correspond to the wireless devices 100 and 200 of FIG. 7 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 7. For example, the transceiver(s) 114 may include the one or more transceivers 106 and 206 and/or the one or more antennas 108 and 208 of FIG. 7. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 6), the vehicles (100b-1 and 100b-2 of FIG. 6), the XR device (100c of FIG. 6), the hand-held device (100d of FIG. 6), the home appliance (100e of FIG. 6), the IoT device (100f of FIG. 6), a digital broadcasting terminal, a hologram device, a public safety device, an MTC device, a medical device, a FinTech device (or a finance device), a security device, a climate/environment device, the AI server/device (400 of FIG. 6), the BSs (200 of FIG. 6), a network node, or the like. The wireless device may be mobile or fixed according to a use case/service.

In FIG. 8, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 9 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 9, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 8, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

As described above, the present disclosure is applicable to various wireless communication systems.

**Claims**

1. A method of transmitting and receiving a signal by a user equipment (UE) in a wireless communication system, the method comprising:

   receiving a channel state information (CSI) reporting configuration;
   receiving a CSI-reference signal (CSI-RS) on a CSI-RS resource based on the CSI reporting configuration; and
   transmitting a CSI report based on a measurement result for the CSI-RS,
   wherein the CSI report is transmitted via a physical uplink control channel (PUCCH) resource, and
   the PUCCH resource is determined based on assumption that each of CSI sub-reports within the CSI report represents rank 1.

2. The method of claim 1, wherein the PUCCH resource is determined based on an uplink control channel (UCI) payload size calculated according to the assumption.

3. The method of claim 1, wherein each of the CSI sub-reports corresponds to a number of antenna ports or a power offset value.

4. The method of claim 1, wherein the CSI report includes Part 2 CSI.

5. The method of claim 1, wherein a number of physical resource blocks (PRBs) for the PUCCH resources is determined based on the assumption.

6. The method of claim 1, wherein, based on the CSI report including the CSI sub-reports, even if a number of the CSI report is one, the PUCCH resource is determined as a PUCCH resource for the plurality of CSI reports from among a PUCCH resource for a single CSI report and a PUCCH resource for a plurality of CSI reports.

7. A user equipment (UE) for transmitting and receiving a signal in a wireless communication system, the UE comprising:

   at least one transceiver;
   at least one processor; and
   at least one memory operably connected to the at least one processor and storing instructions that, when executed, cause the at least one processor to perform a specific operation,
   wherein the specific operation includes:

      receiving a channel state information (CSI) reporting configuration;
      receiving a CSI-reference signal (CSI-RS) on a CSI-RS resource based on the CSI reporting configuration;

and
transmitting a CSI report based on a measurement result for the CSI-RS,
the CSI report is transmitted via a physical uplink control channel (PUCCH) resource, and
the PUCCH resource is determined based on assumption that each of CSI sub-reports within the CSI report represents rank 1.

8. The UE of claim 7, wherein the PUCCH resource is determined based on an uplink control channel (UCI) payload size calculated according to the assumption.

9. The UE of claim 7, wherein each of the CSI sub-reports corresponds to a number of antenna ports or a power offset value.

10. The UE of claim 7, wherein the CSI report includes Part 2 CSI.

11. The UE of claim 7, wherein a number of physical resource blocks (PRBs) for the PUCCH resources is determined based on the assumption.

12. The UE of claim 7, wherein, based on the CSI report including the CSI sub-reports, even if a number of the CSI report is one, the PUCCH resource is determined as a PUCCH resource for the plurality of CSI reports from among a PUCCH resource for a single CSI report and a PUCCH resource for a plurality of CSI reports.

13. A device for a user equipment (UE), the device comprising:

at least one processor; and
at least one computer memory operably connected to the at least one processor and configured, when executed, to cause the at least one processor to perform an operation,
wherein the operation includes:

receiving a channel state information (CSI) reporting configuration;
receiving a CSI-reference signal (CSI-RS) on a CSI-RS resource based on the CSI reporting configuration; and
transmitting a CSI report based on a measurement result for the CSI-RS,
the CSI report is transmitted via a physical uplink control channel (PUCCH) resource, and
the PUCCH resource is determined based on assumption that a rank of each of CSI sub-reports within the CSI report is 1.

14. A computer-readable nonvolatile storage medium comprising at least one computer program that causes at least one processor to perform an operation, the operation comprising:

receiving a channel state information (CSI) reporting configuration;
receiving a CSI-reference signal (CSI-RS) on a CSI-RS resource based on the CSI reporting configuration; and
transmitting a CSI report based on a measurement result for the CSI-RS,
wherein the CSI report is transmitted via a physical uplink control channel (PUCCH) resource, and
the PUCCH resource is determined based on assumption that a rank of each of CSI sub-reports within the CSI report is 1.

【FIG. 1】

【FIG. 2】

【FIG. 3】

【FIG. 4】

| Receive CSI report configuration | S401 |

| Receive CSI-RS on CSI-RS resource based on CSI reporting configuration | S403 |

| Transmit CSI report based on measurement result for CSI-RS | S405 |

【FIG. 5】

<u>1</u>

【FIG. 6】

【FIG. 7】

Device (100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

【FIG. 8】

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100,200)

Communication unit (210)

Control unit (220)

Memory unit (230)

Driving unit (140a)

Power supply unit (140b)

Sensor unit (140c)

Autonomous driving unit (140d)

## INTERNATIONAL SEARCH REPORT

| International application No. |
|---|
| **PCT/KR2024/095292** |

### A. CLASSIFICATION OF SUBJECT MATTER

**H04B 7/06**(2006.01)i; **H04W 52/02**(2009.01)i; **H04W 72/21**(2023.01)i; **H04W 52/36**(2009.01)i; **H04W 72/12**(2009.01)i; **H04W 72/231**(2023.01)i; **H04W 72/232**(2023.01)i; **H04W 24/08**(2009.01)i; **H04B 7/08**(2006.01)i

According to International Patent Classification (IPC) or to both national classification and IPC

### B. FIELDS SEARCHED

Minimum documentation searched (classification system followed by classification symbols)

H04B 7/06(2006.01); H04B 7/024(2017.01); H04B 7/0456(2017.01); H04L 5/00(2006.01); H04W 24/10(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 채널상태정보 보고 설정(channel state information report configuration), CSI-RS, CSI 하위 보고(sub report), 전력 오프셋(power offset)

### C. DOCUMENTS CONSIDERED TO BE RELEVANT

| Category* | Citation of document, with indication, where appropriate, of the relevant passages | Relevant to claim No. |
|---|---|---|
| Y | WO 2023-003295 A1 (LG ELECTRONICS INC.) 26 January 2023 (2023-01-26)<br>See paragraph [0181]; and claim 1. | 1-14 |
| DY | 3GPP; TSG RAN; NR; Physical layer procedures for control (Release 17). 3GPP TS 38.213 V17.4.0. 04 January 2023.<br>See pages 109, 116-117 and 123. | 1-14 |
| Y | MODERATOR (INTEL CORPORATION). Discussion Summary #4 for energy saving techniques of NW energy saving SI. R1-2210620, 3GPP TSG RAN WG1 Meeting #110-bis-e, e-Meeting. 20 October 2022.<br>See page 411. | 3,9 |
| A | KR 10-2023-0014825 A (LG ELECTRONICS INC.) 30 January 2023 (2023-01-30)<br>See claim 1. | 1-14 |
| A | KR 10-2022-0167399 A (TELEFONAKTIEBOLAGET LM ERICSSON(PUBL)) 20 December 2022 (2022-12-20)<br>See claim 1. | 1-14 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 May 2024** | **03 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/095292**

| Patent document cited in search report | | | Publication date (day/month/year) | Patent family member(s) | | | Publication date (day/month/year) |
|---|---|---|---|---|---|---|---|
| WO | 2023-003295 | A1 | 26 January 2023 | KR | 10-2024-0027697 | A | 04 March 2024 |
| KR | 10-2023-0014825 | A | 30 January 2023 | US | 11894901 | B2 | 06 February 2024 |
| | | | | US | 2023-0254023 | A1 | 10 August 2023 |
| | | | | WO | 2022-145948 | A1 | 07 July 2022 |
| KR | 10-2022-0167399 | A | 20 December 2022 | AU | 2021-204028 | A1 | 08 July 2021 |
| | | | | BR | 112019019691 | A2 | 14 April 2020 |
| | | | | CN | 110663214 | A | 07 January 2020 |
| | | | | EP | 3602933 | A1 | 05 February 2020 |
| | | | | EP | 3602933 | B1 | 01 November 2023 |
| | | | | EP | 3602933 | C0 | 01 November 2023 |
| | | | | EP | 4319029 | A2 | 07 February 2024 |
| | | | | IL | 269438 | A | 28 November 2019 |
| | | | | IL | 269438 | B1 | 01 May 2023 |
| | | | | IL | 269438 | B2 | 01 September 2023 |
| | | | | IL | 269438 | D0 | 28 November 2019 |
| | | | | JP | 2020-516140 | A | 28 May 2020 |
| | | | | JP | 2022-106774 | A | 20 July 2022 |
| | | | | JP | 7112421 | B2 | 03 August 2022 |
| | | | | JP | 7449973 | B2 | 14 March 2024 |
| | | | | KR | 10-2019-0126137 | A | 08 November 2019 |
| | | | | MX | 2019011122 | A | 05 December 2019 |
| | | | | RU | 2020126114 | A | 07 February 2022 |
| | | | | RU | 2729769 | C1 | 12 August 2020 |
| | | | | US | 10484973 | B2 | 19 November 2019 |
| | | | | US | 11109358 | B2 | 31 August 2021 |
| | | | | US | 11792773 | B2 | 17 October 2023 |
| | | | | US | 2019-0141677 | A1 | 09 May 2019 |
| | | | | US | 2020-0045675 | A1 | 06 February 2020 |
| | | | | US | 2021-0385798 | A1 | 09 December 2021 |
| | | | | WO | 2018-173002 | A1 | 27 September 2018 |

Form PCT/ISA/210 (patent family annex) (July 2022)